# EUROPEAN PATENT APPLICATION

(11) **EP 4 787 666 A1**
(43) Date of publication of application: **05.08.2026**
(21) Application number: 25220129.8
(22) Date of filing: 02.12.2025
(51) Int. Cl.: H02J 7/52

(54) **METHOD AND APPARATUS FOR BALANCING BATTERY MODULES CONNECTED IN PARALLEL**

(30) Priority: 30.12.2024 KR 20240200893
(71) Applicant: SAMSUNG SDI CO., LTD., Yongin-si, Gyeonggi-do 17084 (KR)
(72) Inventor: KIM, Sukki, 17084 Yongin-si (KR); KIM, Woochoul, 17084 Yongin-si (KR)
(74) Representative: Maiwald GmbH

(57) **Abstract**

Provided are a method and apparatus for performing a balancing of battery modules connected in parallel. The apparatus for performing the balancing of the battery modules connected in parallel includes a memory in which at least one program is stored and at least one processor executing the at least one program, wherein the at least one processor is configured to determine whether a difference of voltage values of a plurality of battery modules is within an identified range, identify one of a plurality of harnesses connecting the plurality of battery modules as a selected harness for performing the balancing, based on determining whether the difference is in the identified range, and perform the balancing of at least one module of the plurality of battery modules by using the selected harness.

## Description

### BACKGROUND

### 1. Field

One or more embodiments relate to a method and an apparatus for balancing battery modules connected in parallel.

### 2. Description of the Related Art

Unlike primary batteries that cannot be charged, secondary batteries can be charged and discharged. A low-capacity secondary battery is usually used in small and portable electronic devices such as smartphones, feature phones, laptop computers, digital cameras, and camcorders, and a large-capacity secondary battery is widely used as a power source for driving motors of hybrid cars, electric cars, etc., and as a power storage battery. A secondary battery generally includes an electrode assembly having a positive electrode and a negative electrode, a case for containing the same, and an electrode terminal connected to the electrode assembly.

However, as the technology related to the secondary battery develops and the unit capacity of secondary battery cells increases, there is a limit in reducing the voltage deviation between the cells using a balancing circuit.

The information disclosed in the Description of the Related Art is only for enhancement of understanding of the background of the disclosure and therefore may contain information that does not constitute related (or prior) art.

### SUMMARY

One or more embodiments of the present disclosure are directed to a method and an apparatus for performing a balancing of battery modules connected in parallel. One or more embodiments of the present disclosure provide a computer-readable storage medium on which a program for executing the method described above, on a computer, is recorded.

However, aspects and features of the present disclosure are not limited to those described above, and other aspects and advantages that are not mentioned above may be clearly understood from the following description of the disclosure by those skilled in the art.

According to an aspect of the disclosure, there is provided a method for performing a balancing to battery modules connected in parallel, which includes determining whether a difference of voltage values of a plurality of battery modules is within an identified range, identifying one of a plurality of harnesses connecting the plurality of battery modules as a selected harness for performing the balancing, based on determining whether the difference is in the identified range, and performing the balancing of at least one module of the plurality of battery modules by using the selected harness.

According to one aspect of the disclosure, there is provided an apparatus for performing a balancing to battery modules connected in parallel, which includes a memory in which at least one program is stored and at least one processor executing the at least one program, wherein the at least one processor determines whether a difference of voltage values of a plurality of battery modules is within an identified range, identify one of a plurality of harnesses connecting the plurality of battery modules as a selected harness for performing the balancing, based on determining whether the difference is in the identified range, and performs the balancing of at least one module of the plurality of battery modules by using the selected harness.

According to one aspect of the disclosure, there is provided a computer-readable storage medium on which a program for executing the method described above on a computer is recorded.

### BRIEF DESCRIPTION OF THE DRAWINGS

The following drawings attached to the present specification illustrate embodiments of the disclosure and serve to further understand the technical idea of the disclosure together with the detailed description of the disclosure described below, and therefore the disclosure should not be interpreted as being limited to matters described in such drawings.
FIG. 1 is block diagram of battery modules connected in parallel for which balancing is performed, according to an embodiment;
FIG. 2 is a block diagram of an apparatus for balancing battery modules connected in parallel, according to an embodiment;
FIG. 3 is a flowchart of a method for balancing battery modules connected in parallel, according to an embodiment;
FIG. 4 is a block diagram of a plurality of battery modules for which a difference of voltage values is calculated, according to an embodiment; and
FIG. 5 is a block diagram of a plurality of harnesses connecting the battery modules, according to an embodiment.

### DETAILED DESCRIPTION

Hereinafter, one or more embodiments of the disclosure will now be described in detail with reference to the accompanying drawings. The terms or words used in the present specification and claims are not to be interpreted as limited to the usual or dictionary meanings, and are to be interpreted as meanings and concepts that conform to or are consistent with the technical idea of the present invention based on the principle that the inventor may be his/her own lexicographer to appropriately define the concept of the term in order to describe his or her own invention in the best way. Therefore, the embodiments described in the specification and the configurations illustrated in the drawings are only some of the embodiments of the present invention and do not represent all of the technical ideas, aspects, and features of the present disclosure, and it should be understood that there may be various equivalents and modified examples that may replace or modify the embodiments at the time of filing the present application.

In addition, as used herein, "comprise, include" and/or "comprising, including" specifies the existence of the aforementioned shapes, numbers, steps, actions, members, elements, and/or groups, and does not exclude the existence or addition of one or more other shapes, numbers, actions, members, elements, and/or groups. In addition, when describing embodiments of the disclosure, "can", "may~" may include "one or more embodiments of the disclosure."

In addition, to help understanding of the disclosure, the accompanying drawings are not illustrated to the actual scale, and the dimensions of some components may be exaggerated. In addition, the same reference numbers may be designated as the same components in different embodiments.

The saying that two things being compared are "the same" means that they are "substantially the same". Therefore, substantial equivalence may include such a low deviation that are regarded as a low level in the art, for example, deviations 5% or less. In addition, when a parameter is uniform in a certain region or area, it may mean that the parameter is uniform in terms of an average.

Although the terms the first, the second, etc. are used to describe various components, those components are not limited by those terms. Those terms are only used for distinguishing one component from another component, and it goes without saying that the first component may be the second component unless otherwise described to the contrary.

Throughout the specification, unless otherwise described to the contrary, each component may be singular or plural.

Any configuration being placed "on (or below)" a component or "on (or below)" a component may mean not only that any configuration is placed in contact with the upper surface (or lower surface) of said component, but also that other configurations may be interposed between said component and any configuration placed on (or below) said component.

In addition, when it is described that a component is "connected," "coupled," or "linked" to another component, it should be understood that the components may be directly connected or connected to one another, but that other components may also be "interposed" between the components, or that each component may be "connected," "coupled," or "linked" through other components. Also, when we say that a part is electrically coupled to another part, this includes not only cases where they are directly connected, but also cases where they are connected with another element in between.

When referred to as "A and/or B" throughout the specification, it means that A, B, or A and B unless otherwise described to the contrary. That is, "and/or" includes all or any combination of a plurality of items listed. When it comes to "C to D", it means that it is greater than or equal to C and less than or equal to D, unless otherwise described to the contrary.

The terminology used in the disclosure is intended to describe embodiments of the disclosure and are not intended to be limiting of the disclosure.

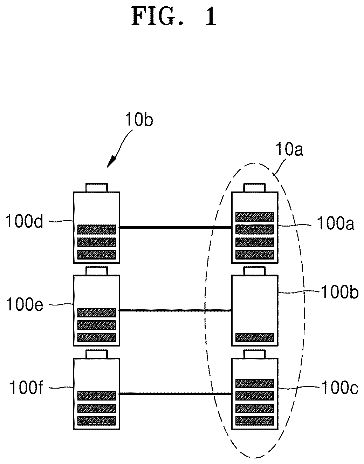

Hereinafter, the disclosure is described in detail with reference to the accompanying drawings. In some embodiments, a method for balancing battery modules connected in parallel according to an embodiment is described in more detail with reference to FIGS. 1 to 5. However, the embodiments may be implemented in various different forms and are not limited to the examples described herein.

FIG. 1 is a block diagram of battery modules connected in parallel for which balancing is performed, according to an embodiment.

Referring to FIG. 1, a battery rack 10a, 10b (collectively referenced as 10) may include a plurality of battery modules 100a-100f (collectively referenced as 100).

In some embodiments, the battery rack 10 may be a partial configuration of a battery including the plurality of battery modules 100 and/or a plurality of cells.

In some embodiments, the battery may include a plurality of battery racks 10 and each voltage of the plurality of battery racks 10 may be the same. For example, the voltage of battery rack 10a may be the same as the voltage of battery rack 10b. However, the voltages of the plurality of battery modules 100 in each of the plurality of battery racks 10 may be different. For example, the voltage of battery module 100a may be different from the voltage of battery module 100d.

In some embodiments, the voltages of a first battery rack 10a and a second battery rack 10b may be the same, but the voltages of a first battery module 100a in the first battery rack and a second battery module 100d in the second battery rack may be different. In some embodiments, the voltage of the battery modules 100 in each of the plurality of battery racks 10 may be maintained the same by connecting the battery racks 10 in parallel. In some embodiments, the balancing may be performed in units of the battery rack 10.

In some embodiments, the first battery module 100a in the first battery rack 10a may be connected in parallel to the second battery module 100d in the second battery rack 10b having the same electric potential as the first battery module, to make the voltage maintain the same by a unit of the battery module 100. In some embodiments, the balancing may be performed by a unit of the battery module 100.

In some embodiments, the plurality of modules 100a, 100b, 100c in the first battery rack may be connected in parallel to respectively the plurality of modules 100d, 100e, 100f in the second battery rack 10b having the same electric potential with the corresponding module, to perform the balancing in units of the battery module 100.

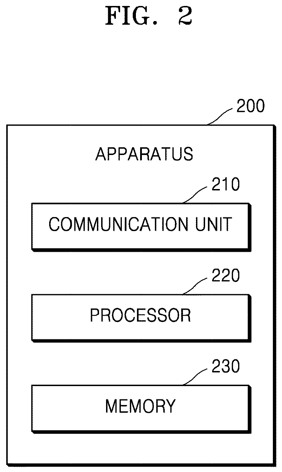

FIG. 2 is a block diagram of an apparatus for balancing battery modules connected in parallel, according to an embodiment.

Referring to FIG. 2, an apparatus 200 for balancing the battery modules 100 that are connected in parallel with each other (hereinafter, referred to as "apparatus") may include a communication unit 210, a processor 220, and a memory 230. In the apparatus 200 shown in FIG. 2, only components related to the present embodiment are illustrated. Thus, it will be obvious to a person skilled in the art that the apparatus 200 will include other components in addition to the components depicted in FIG. 2.

The communication unit 210 may include one or more components that enable wired or wireless communication with an external server or an external device. In some embodiments, the communication unit 210 may include a near field communication unit (not shown) and a mobile communication unit (not shown) for communication with the external server or the external device.

The memory 230 may be a hardware that stores a variety of data processed in the apparatus 200 and may store a program for processing and controlling the processor.

In some embodiments, a variety of data, such as data related to the charging and discharging of the battery, measured voltage values of the battery, and data generated by the operation of the processor 220, may be stored in the memory 230. In some embodiments, an operating system (OS) and at least one program (for example, a program for operating the processor 220) may be stored in the memory 230.

The memory 230 may include random access memory (RAM), e.g., dynamic random access memory (DRAM), static random access memory (SRAM), etc., read-only memory (ROM), electrically erasable programmable read-only memory (EEPROM), CD-ROM, Blue-ray or other optical disk storage, hard disk drive (HDD), solid state drive (SSD), flash memory, or any other volatile or non-volatile memory or storage device.

The processor 220 may control overall operations of the apparatus 200. In some embodiments, the processor 220 may execute the programs stored in the memory 230 to control an input unit (not shown), a display unit (not shown), the communication unit 210, the memory 230, and/or the like.

The processor 220 may be implemented by using at least one of application specific integrated circuits (ASICs), digital signal processes (DSPs), digital signal processing devices (DSPDs), programmable logic devices (PLDs), field programmable gate arrays (FPGAs), controllers, micro-controller units, microprocessors, or other electrical units for performing functions.

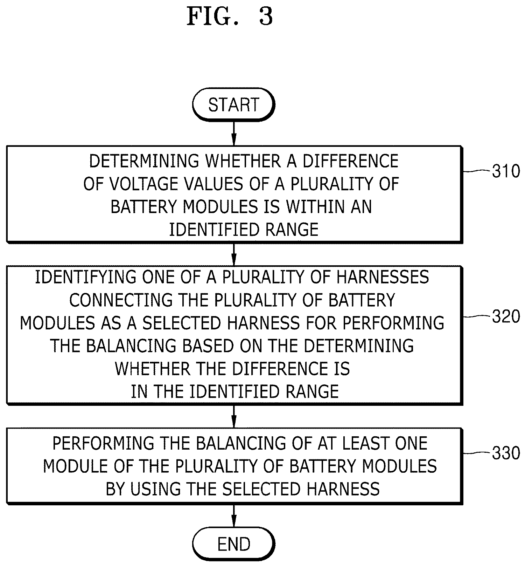

The processor 220 may execute the programs stored in the memory 230, to control the operation of the apparatus 200. In some embodiments, the processor 220 may perform at least one operation of the method for balancing the battery modules connected in parallel, as described with reference to FIGS. 3 to 5.

FIG. 3 is a flowchart of a method for balancing battery modules connected in parallel, according to an embodiment.

Referring to FIG. 3, the method for balancing battery modules connected in parallel may include operations 310 to 330. However, the method is not limited thereto, and other operations may be included in the method for balancing battery modules connected in parallel in addition to the operations shown in FIG. 3. In some embodiments, as described above with reference to FIGS. 1 and 2, at least one of the operations in the flowchart shown in FIG. 3 may be processed by the processor 220.

In operation 310, the processor 220 may determine whether a difference of voltage values of one or more of the plurality of battery modules is within a preset range.

In some embodiments, the processor 220 may detect or identify the voltage of the plurality of battery modules (e.g., each of the plurality of battery modules), calculate the difference of voltage values of the detected voltages of the modules having the same electric potential among the plurality of battery modules, and determine whether the calculated voltage difference is within an identified (e.g., preset) range.

In some embodiments, the plurality of battery modules 100 in the first and second battery racks 10 may be configured in such a way that one module (e.g., module 100b) in the first battery rack 10a and one module (e.g., module 100e) in the second battery rack 10b having the same electric potential are connected in parallel with each other.

In operation 320, the processor 220 may determine or identify one of a plurality of harnesses connected with the plurality of battery modules as a selected harness to perform the balancing, based on the result of determining whether the calculated voltage difference is within the preset or identified range.

In some embodiments, the plurality of harnesses may include a first harness including a negative temperature coefficient (NTC) device and a second harness including a positive temperature coefficient (PTC) device.

In an embodiment, based on determining that the voltage difference is within the preset range, the processor 220 may determine the first harness among the plurality of harnesses as the harness for performing the balancing. In some embodiments, based on determining that the voltage difference is not within (e.g., outside) the preset range, the processor 220 may determine or identify the second harness among the plurality of harnesses as the selected harness for performing the balancing.

In operation 330, the processor 220 may perform the balancing of at least one module 100 that satisfies a balancing criterion (e.g., voltage difference is within the preset range) for the balancing by using the determined or selected harness.

In some embodiments, the processor 220 may perform the balancing by controlling a switch in the determined harness.

In an embodiment, the processor 220 may perform the balancing by increasing an amount of electrical current flowing in the determined harness with the NTC of the determined harness. In some embodiments, the processor 220 may perform the balancing by decreasing the amount of electrical current flowing in the determined harness with the PTC of the determined harness.

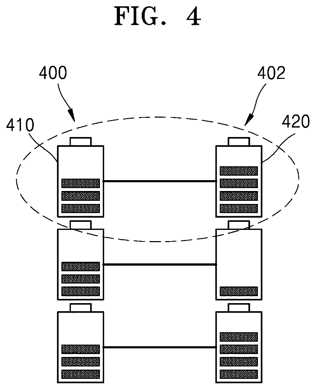

FIG. 4 is a block diagram of a plurality of battery modules for which the difference of voltage values is calculated, according to an embodiment.

Referring to FIG. 4, the processor 220 may calculate the difference of voltage values of a first battery module 410 in a first battery rack 400 and a second battery module 420 in a second battery rack 402. The first battery module 410, the first battery rack 400, the second battery module 420, and the second battery rack may be similar to respectively the first battery module 100a, the first battery rack 10a, the second battery module 100d, and the second battery rack 10b, the second battery module 100d.

In some embodiments, the processor 220 may detect each voltage of the plurality of battery modules 410, 420.

In some embodiments, the processor 220 may detect the voltage of all battery modules in each of the first battery rack 400 and the second battery rack 402, as well as the first battery module 410 and the second battery module 420. In some embodiments, each of the plurality of battery modules may be configured in such a way that the modules having the same electric potential are connected in parallel with each other.

In some embodiments, the processor 220 may calculate the difference of voltage values of the voltages of the modules having substantially the same electric potential among the plurality of battery modules.

In some embodiments, the processor 220 may calculate the difference of the detected voltages between the first battery module 410 and the second battery module 420 that have substantially the same electric potential with each other.

Based on detecting a voltage difference between the battery modules having substantially the same electric potential, the processor 220 may determine that the battery modules are to be balanced. Herein, the balancing refers to a process of making the voltages or charge states of the plurality of cells or the plurality of modules, which constitute a battery pack, substantially uniform.

In some embodiments, the processor 220 may determine or identify the modules 410, 420 having different voltages despite the same electric potential, as defective modules that are to be balanced.

In some embodiments, when the defective modules are found, the processor 220 may perform the balancing in different ways depending on the voltage difference of the defective modules.

In some embodiments, the processor 220 may determine whether the calculated voltage difference is within an identified or preset range. In some embodiments, the processor 220 may determine whether the difference of voltage values of the first battery module 410 and the second battery module 420 is within the identified or preset range. In some embodiments, the preset range may be in a range of about 0 mV to about 20 mV, but is not limited thereto. In some embodiments, the calculated voltage difference may be expressed as an absolute value, and accordingly, when the voltage difference is within the preset range, the voltage difference may be deemed to be within the range of about 0 mV to about 20 mV, and when the voltage difference is not within or outside of the preset range, the voltage difference may be deemed to exceed about 20 mV.

In some embodiments, based on the result of determining whether the voltage difference is in the preset range, the processor may determine any one of the plurality of harnesses connecting the plurality of battery modules as a harness for performing the balancing.

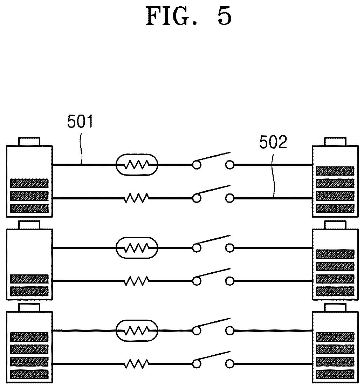

FIG. 5 is a block diagram of a plurality of harnesses connecting the battery modules, according to an embodiment. Referring to FIG. 5, the processor 220 may determine or identify one of a first harness 501 or a second harness 502 connecting the plurality of battery modules as a selected harness for performing the balancing.

In some embodiments, the plurality of harnesses may include the first harness 501 including the negative temperature coefficient (NTC) device and the second harness 502 including the positive temperature coefficient (PTC) device. In this regard, both the NTC device and the PTC device may have characteristics that the resistance is changed depending on the temperature. In some embodiments, the resistance of the NTC device decreases as the temperature increases and the resistance of the PTC device increases as the temperature increases.

In some embodiments, based on the result of determining whether the difference of voltage values of the defective modules is within the preset range, the processor 220 may identify one of the plurality of harnesses connecting the plurality of battery modules as a selected harness for performing the balancing.

In an embodiment, based on determining that the difference of voltage values of the defective modules is within the identified range, the processor may determine the first harness 501 among the plurality of harnesses as the harness for performing the balancing. In some embodiments, when the difference of voltage values of the first battery module and the second battery module is within the identified range (e.g., the difference of voltage values of the first battery module and the second battery module is not big or below a threshold), the processor 220 may perform the balancing by using the first harness 501.

In some embodiments, based on determining that the difference of voltage values of the defective modules is determined to not be within (e.g., be outside) the identified range, the processor 220 may determine or identify the second harness 502 among the plurality of harnesses as the harness for performing the balancing. In some embodiments, when the difference of voltage values of the first battery module and the second battery module is not within the identified range (e.g., the difference of voltage values of the first battery module and the second battery module is big or above a threshold), the processor 220 may perform the balancing by using the second harness 502.

In some embodiments, the processor 220 may perform the balancing by controlling a switch in the harness for performing the balancing.

In an embodiment, when the first harness 501 is determined as the harness for performing the balancing, the processor 220 may perform the balancing by controlling the switch in the first harness 501 to close. In this regard, the processor may perform the balancing by increasing the amount of electrical current flowing in the first harness 501, which is identified as the harness for performing the balancing, with the NTC device of the first harness 501.

In some embodiments, when the second harness 502 is determined or identified as the harness for performing the balancing, the processor 220 may perform the balancing by controlling the switch in the second harness 502 to close. In this regard, the processor 220 may perform the balancing by decreasing the amount of electrical current flowing in the second harness 502, which is identified as the harness for performing the balancing, with the PTC device of the second harness 502.

Although only the first harness 501 including the NTC device and the second harness 502 including the PTC device are illustrated in FIG. 5, the embodiments are not limited thereto, and more harnesses may be provided for connecting the first battery module 410 and the second battery module 420 in parallel with each other.

In some embodiments, the first battery module 410 and the second battery module 420 may be connected by a pure harness or by a composite harness having a resistor.

In some embodiments, the processor 220 may determine any one of the plurality of harnesses as the harness for performing the balancing depending on the difference of voltage values of the first battery module 410 and the second battery module 420.

According to the method described in the disclosure, the balancing may be performed to the modules that are connected in parallel and have the same electric potential, depending on the voltage difference therebetween, to reduce the time required for balancing and also increase space utilization.

Furthermore, the method described above may be written as a program that can be executed on a computer and may be implemented on a general-purpose digital computer that operates the program using a computer-readable storage medium. In some embodiments, the data structure used in the method described above may be recorded on the computer-readable storage medium through various mechanisms. The computer-readable storage medium may include storage media such as magnetic storage media (for example, read only memory (ROM), random access memory (RAM), universal serial bus (USB), floppy disk, hard disk, etc.) and optical readable media (for example, compact disc-read only memory (CD-ROM), digital versatile disc (DVD), etc.).

According to an embodiment of the disclosure, even though the capacity of a specific cell is insufficient, the capacity of the battery may be secured to a maximum by reducing the capacity per cell, not per rack.

Furthermore, one or more (e.g., all) modules in the battery may be connected as one, to minimize capacity deviation.

However, aspects and features of this disclosure are not limited to those described above, and other aspects and advantages that are not mentioned above can be clearly understood from the description of the disclosure by those skilled in the art.

Those skilled in the art related to this embodiment will understand that the present disclosure can be implemented in a modified form without departing from the essential characteristics of the description as given above. It should be understood that methods disclosed herein should be considered in a descriptive sense only and not for purposes of limitation, and the scope of rights should be interpreted as including all differences within the equivalent scope, which are presented in the claims, not in the above description.

## Claims

1. A method for performing balancing to battery modules (410, 420) connected in parallel, the method comprising:
determining (310) whether a difference of voltage values of a plurality of battery modules (410, 420) is within an identified range;
identifying (320) one of a plurality of harnesses connecting the plurality of battery modules (410, 420) as a selected harness for performing the balancing, based on the determining whether the difference is in the identified range; and
performing (330) the balancing of at least one module of the plurality of battery modules (410, 420) by using the selected harness.

2. The method of claim 1, wherein the determining whether the difference of voltage values is within the identified range includes:
detecting a voltage value of one or more of the plurality of battery modules (410, 420);
calculating a calculated difference between first and second detected voltage values of first and second modules of the plurality of battery modules (410, 420) having a same electric potential; and
determining whether the calculated difference is within the identified range.

3. The method of claim 2, wherein the first and second modules having the same electric potential are connected in parallel.

4. The method of any one of the preceding claims, wherein
the plurality of harnesses include a first harness (501) including a negative temperature coefficient, NTC, device and a second harness (502) including a positive temperature coefficient, PTC, device.

5. The method of claim 4, wherein the identifying of the one of the plurality of harnesses for performing the balancing includes
identifying the first harness (501) among the plurality of harnesses as the selected harness for performing the balancing, based on determining that the difference is within the identified range.

6. The method of claim 4, wherein the identifying of the one of the plurality of harnesses for performing the balancing includes
identifying the second harness (502) among the plurality of harnesses as the selected harness for performing the balancing, based on determining that the difference is determined to be outside the identified range.

7. The method of any one of the preceding claims, wherein the performing of the balancing includes controlling a switch in the selected harness.

8. The method of any one of the preceding claims, wherein the performing of the balancing includes increasing an amount of electrical current flowing in the selected harness, wherein the selected harness includes a negative temperature coefficient, NTC, device.

9. The method of any one of the preceding claims, wherein the performing of the balancing includes decreasing an amount of electrical current flowing in the selected harness, wherein the selected harness includes a positive temperature coefficient, PTC, device.

10. A computer-readable storage medium recorded thereon a program for executing the method of any one of the claims 1 to 9 on a computer.

11. An apparatus (200) for performing balancing to battery modules (410, 420) connected in parallel, the apparatus (200) comprising:
a memory (230) in which at least one program is stored; and
at least one processor (220) configured to execute the at least one program,
wherein the at least one processor (220) is further configured to:
determine whether a difference of voltage values of a plurality of battery modules (410, 420) is within an identified range;
identify one of a plurality of harnesses connecting the plurality of battery modules (410, 420) as a selected harness for performing the balancing, based on determining whether the difference is in the identified range; and
perform the balancing of at least one module of the plurality of battery modules (410, 420) by using the selected harness.

12. The apparatus (200) of claim 11, wherein the at least one processor (220) is further configured to detect a voltage value of one or more of the plurality of battery modules (410, 420), calculate a calculated difference between first and second detected voltage values of first and second modules of the plurality of battery modules (410, 420) having a same electric potential, and determine whether the calculated difference is within the identified range.

13. The apparatus (200) of claim 11 or 12, wherein the plurality of harnesses include a first harness (501) including a negative temperature coefficient, NTC, device and a second harness (502) including a positive temperature coefficient, PTC, device.

14. The apparatus (200) of claim 13, wherein the at least one processor (220) is further configured to identify the first harness (501) among the plurality of harnesses as the selected harness for performing the balancing, based on determining that the difference is within the identified range.

15. The apparatus (200) of claim 13, wherein the at least one processor (220) is further configured to identify the second harness (502) among the plurality of harnesses as the selected harness for performing the balancing, based on determining that the difference is determined to be outside the identified range.
